Europäisches Patentamt

**European Patent Office**

**Office européen des brevets**

(11) Veröffentlichungsnummer: **0 324 898**

**A1**

(12) **EUROPÄISCHE PATENTANMELDUNG**

(21) Anmeldenummer: **88117379.3**

(22) Anmeldetag: **19.10.88**

(51) Int. Cl.⁴: **B65H 67/06 , B65G 17/00 , B65H 54/64**

(30) Priorität: **20.01.88 DE 3801424**

(43) Veröffentlichungstag der Anmeldung:
**26.07.89 Patentblatt 89/30**

(84) Benannte Vertragsstaaten:
**CH ES FR GB IT LI**

(71) Anmelder: **Croon + Lucke Maschinenfabrik GmbH + Co. KG**
**Flachsstrasse 14**
**D-7947 Mengen(DE)**

(72) Erfinder: **Wedler, Klaus, Dipl.-Ing.**
**Beethovenstrasse 59**
**D-7951 Mittelbiberach(DE)**

(74) Vertreter: **Griessbach, Dieter, Dr. et al**
**Höger, Stellrecht + Partner Uhlandstrasse 14 c**
**D-7000 Stuttgart 1(DE)**

(54) Vorrichtung zum lagegenauen Übernehmen und Transportieren von Knäueln an einer Knäuelwickelmaschine.

㉟ Eine Vorrichtung zum lagegenauen Übernehmen und Transportieren von Knäueln (19) ist unmittelbar an einer Knäuelwickelmaschine (10) mit mehreren, in einer Reihe nebeneinander angeordneten Wickeldornen (17) positioniert. Die Vorrichtung umfaßt mehrere, an einem Endlosförderer befestigt, mit den Wikkeldornen ausrichtbare Transportdorne (9). Die Knäuel (19) sind durch eine Abschiebeeinrichtung (21) von den Wickeldornen (17) auf die Transportdorne (9) überführbar. Der Endlosförderer (1) weist quer zur Förderrichtung verlaufende Gleitführungen (6) auf, auf denen die Transportdorne (9) verschieblich sind. An den Transportdornen greifen ortsfeste und bewegliche Führungsschienen (12) an, welche die Transportdorne (9) mit den von ihnen getragenen Knäueln (19) auf den Gleitführungen (6) in mehrere, parallel zur Förderrichtung nebeneinander verlaufende Bahnen lenken.

FIG.4

## Vorrichtung zum lagegenauen Übernehmen und Transportieren von Knäueln an einer Knäuelwickelmaschine

Die Erfindung betrifft eine Vorrichtung zum lagegenauen Übernehmen und Transportieren von Knäueln an einer Knäuelwickelmaschine mit mehreren in einer Reihe nebeneinander angeordneten Wickeldornen, wobei die Vorrichtung mehrere an einem Endlosförderer angeordnete, mit den Wickeldornen ausrichtbare Transportdoren aufweist, und die Knäuel durch eine Abschiebeeinrichtung von den Wickeldornen auf die Transportdorne überführbar sind.

Bei einer bekannten Vorrichtung dieser Art (DE-OS 34 06 636) werden die Knäuel vom Endlosförderer in einer einzigen Reihe oder Bahn abtransportiert. Da die Knäuel meist in mehreren Reihen nebeneinander und gegebenenfalls auch übereinander verpackt werden, beispielsweise durch Einhüllen in eine Folie, müssen die in einer einzigen Reihe hintereinander anfallenden Knäuel erst relativ zueinander verschoben und mehrreihig angeordnet werden. Hierzu ist eine besondere, der Knäuelwickelmaschine und der Transportvorrichtung nachgeschaltete Vorrichtung erforderlich, die den ohnehin erheblichen Platzbedarf derartiger Maschinen und Vorrichtungen noch zusätzlich erhöht. Außerdem sind bei der bekannten Vorrichtung keilförmige Zwischendorne erforderlich, auf welche die Knäuel zuerst überführt werden, bevor sie auf die eigentlichen Transportdorne gelangen.

Der Erfindung liegt die Aufgabe zugrunde, einen gattungsgemäße Vorrichtung so zu verbessern, daß die transportierten Knäuel in mehreren Reihen neben- oder übereinander abgegeben werden und außerdem die Knäuel von den Wickeldornen direkt auf die Transportdorne überführbar sind.

Die Aufgabe wird erfindungsgemäß dadurch gelöst, daß der Endlösförderer quer zur Förderrichtung verlaufende Gleitführungen aufweist, auf denen die Transportdorne verschieblich sind, und daß an den Transportdornen angreifende, ortsfeste oder bewegliche Führungsschienen vorgesehen sind, welche die Transportdorne mit den von ihnen getragenen Knäueln auf den Gleitführungen in bestimmte, parallel zur Förderrichtung nebeneinander verlaufende Bahnen lenken.

Dabei kann vorgesehen werden, daß die Knäuel durch die Abschiebeeinrichtung von den Wickeldornen direkt auf die Transportdorne überführbar sind.

Die nachstehende Beschreibung einer bevorzugten Ausführungsform der Erfindung dient im Zusammenhang mit beiliegender Zeichnung der weiteren Erläuterung. Es zeigen:

Figur 1 schematisch eine Vorderansicht einer Vorrichtung zum lagegenauen Übernehmen und Transportieren von Knäulen an einer Knäuelwickelmaschine;

Figur 2 eine schematische Draufsicht der Vorrichtung aus Figur 1 in Richtung des Pfeiles II;

Figur 3 eine schematische Schnittansicht der Vorrichtung aus Figur 1 in Richtung der Pfeile III-III und

Figur 4 eine schematische Schnittansicht entlang der Linie IV-IV in Figur 1.

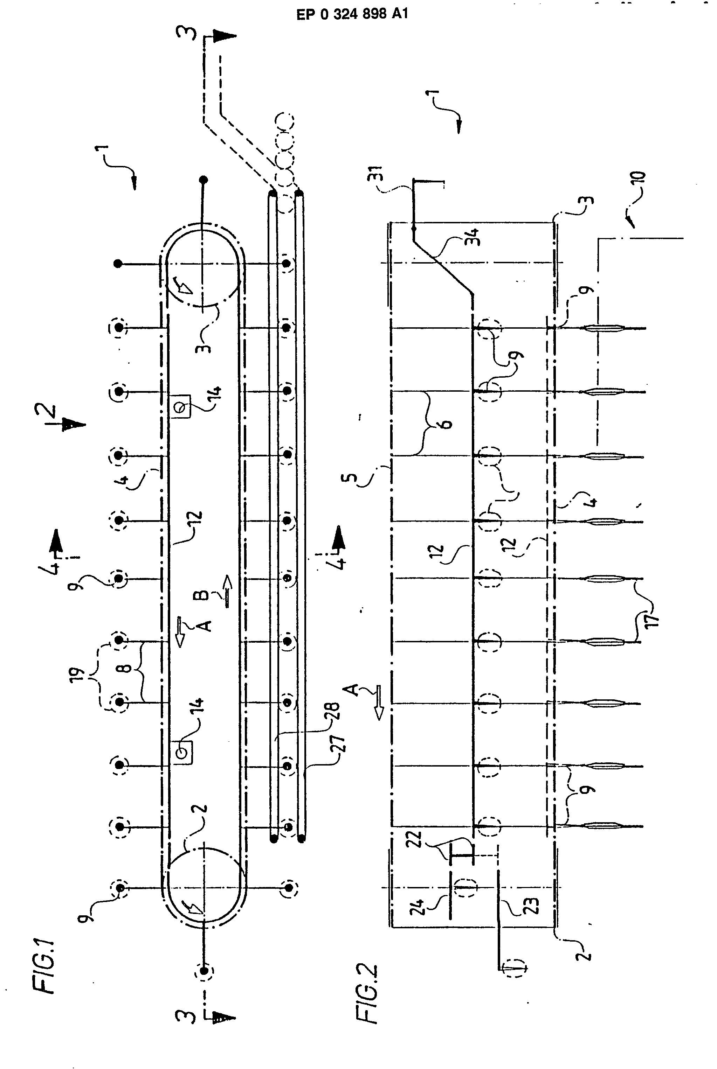

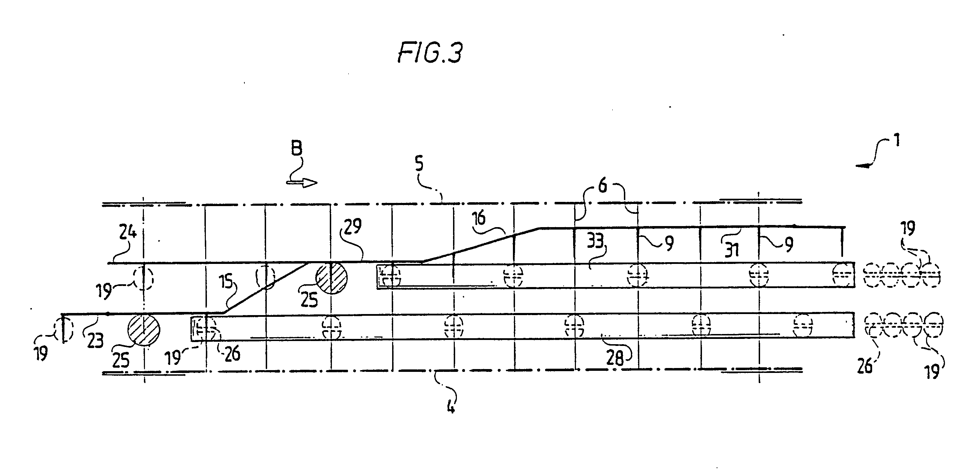

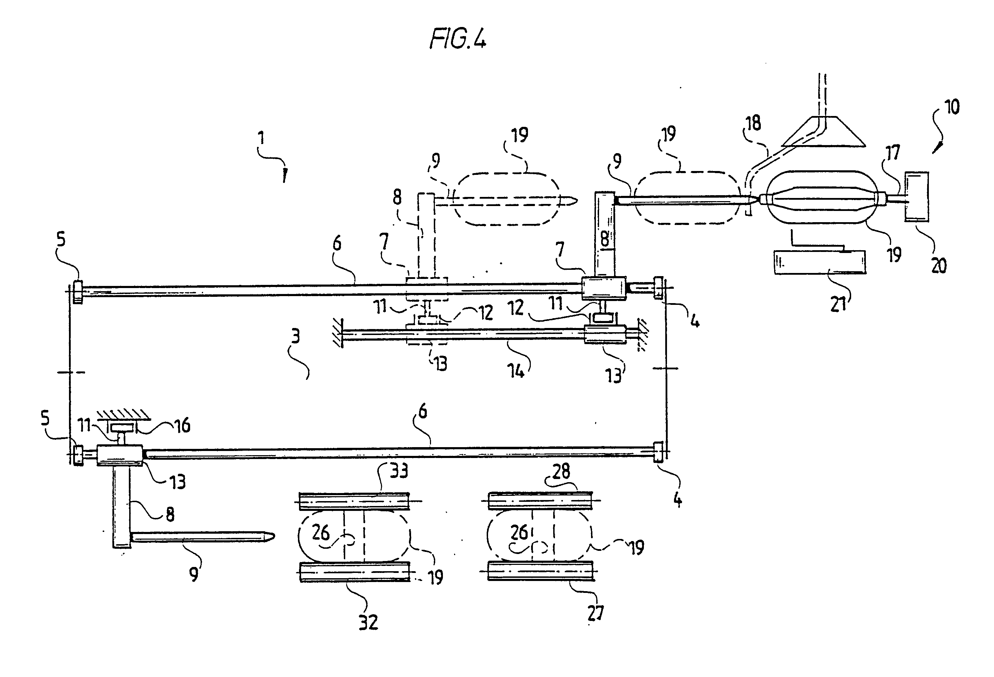

Die Figuren 1 und 4 zeigen schematisch einen Endlosförderer 1, der zwei in gegenseitigem Abstand umlaufende, über Walzen 2, 3 geführte Transportketten 4, 5 umfaßt. Die Walzen 2, 3, von denen wenigstens eine motorisch angetrieben ist, laufen in Richtung der in Figur 1 eingezeichneten Pfeile um. Infolgedessen bewegt sich das obere Trum (Figur 2) des Endlosförderers 1 in Richtung des Pfeiles A, während sich das untere Trum (Figur 3) in Richtung des Pfeiles B bewegt.

Wie aus Figur 4 hervorgeht, sind die Transportketten 4, 5 durch Stäbe 6 miteinander verbunden, die als Gleitführungen für Schlitten 7 dienen, von denen an Tragarmen 8 angeordnete Transportdorne 9 parallel zu den Führungsstäben 6 abstehen. Von den Schlitten 7 stehen Mitnehmer 11 ab, die in eine Führungsschiene 12 eingreifen. Die Führungsschiene 12 ist ihrerseits mittels eines Schlittens 13 an einer Gleitführung 14 parallel zu den Stäben 6 verschieblich, so daß der Transportdorn 9 aus der in Figur 4 mit ausgezogenen Linien dargestellten Position in die gestrichelt dargestellte Positin überführt werden kann, wenn die Führungsschiene 12 auf der Gleitführung 14 entsprechend verschoben wird, beispielsweise mit Hilfe eines (nicht dargestellten) Kolben-Zylinder-Aggregats. Mit Hilfe einer weiteren, später noch zu beschreibenden Führungsschiene 16 ist auch eine Verschiebung der Transportdorne 9 in eine in Figur 4 links unten dargestellte Position möglich.

Wie die Figuren 1 und 4 schematisch zeigen, ist der Endlosförderer 1 unmittelbar vor einer an sich bekannten Knäuelwickelmaschine 10 angeordnet, die mehrere in einer horizontalen Reihe nebeneinander angeordnete Wickeldorne 17 umfaßt, auf welche mit Hilfe eines Wickelflügels 18 in bekannter Weise Knäuel 19, beispielsweise aus Wollfaden, aufgewickelt werden können. Ein Gestell der Knäuelwickelmaschine 10 ist in Figur 4 schematisch dargestellt und mit dem Bezugszeichen 20 versehen. Wie sich aus Figur 2 und 4 ergibt, können die vom oberen Trum des Endlosförderers 1 mitgeführten Transportdorne 9 koaxial vor den Wickeldornen 17 ausgerichtet werden. Dies erfolgt dadurch, daß bei stillstehendem Endlosförderer 1 die Führungsschiene 12 aus der in Figur 2 mit ausgezogener Linie dargestellten Position in die mit gestrichelter Linie dargestellte Position überführt wird, der in Figur 4 die mit ausgezogenen Linien rechts oben dargestellte Position des Transportdornes 9 entspricht. In dieser Position werden die auf den Wickeldornen 17 gewickelten Knäuel 19 mit Hilfe einer an sich bekannten, in Figur 4 schematisch angedeuteten, Abschiebeeinrichtung 21 auf die Transportdorne 9 überführt. Anschließend werden durch entsprechende Verschiebung der Führungsschiene 12 die mit den Knäueln 19 versehenen Transportdorne 9 in die in Figur 4 oben mit gestrichelten Linien dargestellte Position zurückgezogen. Diese Position entspricht in Figur 2 der mit ausgezogenen Linien dargestellte Lage der Führungsschiene 12. Die Wickeldorne 17 sind nunmehr für die Wicklung neuer Knäuel bereit.

Ausgehend von der in Figur 2 dargestellten Lage der Führungs schiene 12 und der von den Transportdornen 9 getragenen Knäuel 19 wird nun der Endlosförderer 1 in Umlauf versetzt, so daß die Transportdorne 9, geführt von den in der Führungsschiene 12 gleitenden Mitnehmern 11, in Richtung des Pfeiles A (Figur 1 und 2) vorgeschoben werden. Die Mitnehmer 11 der einzelnen Transportdorne 9 gelangen dabei in quer zur Förderrichtung verschiebliche, verhältnismäßig kurze Führungsschienen 22, die von einem (nicht dargestellten) Antrieb quer zur Förderrichtung A und parallel zu den Stäben hin- under herverschieblich sind. Hierdurch gelangen die Transportdorne 9 mit ihren Knäulen 19 abwechselnd in zwei nebeneinander verlaufende, um die Walze 2 herumgekrümmte Führungsschienen 23, 24, die in gegenseitigem Abstand verlaufen. Somit laufen die Knäuel 19 nunmehr in zwei nebeneinander liegenden Bahnen und Reihen weiter - vergl. Figur 3.

Die auf der ersten, von der Führungsschiene 23 bestimmten Bahn laufenden Knäuel werden an einer in Figur 3 schematisch mit 25 angedeuteten Stelle mit einem Pfeiletikett oder einer Banderole 26 versehen. Hinter der Banderolier- oder Etikettierstelle 25 sind zwei Förderbänder 27, 28 in einem Abstand angeordnet, der geringfügig kleiner als der Durchmesser der Knäuel 19 ist (Figur 1). Das jeweils innen gelegene Trum der Transportbänder 27, 28 bewegt sich in Richtung des Pfeiles B mit einer Geschwindigkeit, die im wesentlichen der Transportgeschwindigkeit des Endlosförderers 1 gleich ist. Somit werden die von den Transportdornen 9 getragenen, banderolierten oder etikettierten Knäuel 19 zwischen die Förderbänder 27, 28 eingebracht und nunmehr gleichzeitig auch von diesen mitgenommen. Wie Figur 3 zeigt, werden die Transportdorne 9 aus den zwischen den Transportbändern 27, 28 angeordneten Knäueln 19 mit Hilfe einer ortsfesten, schräg verlaufenden Führungsschiene 15 herausgezogen, sobald die Knäuel zwischen die Transportbänder 27, 28 einge treten sind und von diesen festgehalten und mitgenommen werden. Aus der Führungsschiene 15 gelangen die mit den Transportdornen 9 verbundenen Mitnehmer 11 in eine wiederum parallel zur Förderrichtung B verlaufende Führungsschiene 29 und von da über eine weitere ortsfeste, schräg verlaufende Führungsschiene 16, die bereits im Zusammenhang mit Figur 4 erwähnt wurde und dort links unten dargestellt ist, in eine weitere, ortsfeste, in Förderrichtung B verlaufende Führungsschiene 31, so daß die Transportdorne 9 nunmehr die in Figur 3 rechts oben dargestellte Position einnehmen.

Die einer zweiten, durch die Führungsschiene 24 bestimmten Bahn vorgeschobenen Knäuel 19 werden ebenfalls an einer schematisch angedeuteten Stelle 25 mit einer Banderole 26 oder einem Pfeiletikett versehen. Anschließend laufen die banderolierten oder etikettierten Knäuel zwischen zwei Transportbändern 32, 33 (Figur 3 und 4) ein, die in ihrer Funktion den Transportbändern 27, 28 entsprechen. Die Einlaufstelle der in dieser Bahn geführten Knäuel ist dabei, wie Figur 3 zeigt, gegenüber der Einlaufstelle der in der anderen Bahn geführten Knäuel in Förderrichtung B versetzt. Nach Übernahme der Knäuel durch die Transportbänder 32, 33 werden die Transportdorne 9 mit Hilfe der ortsfesten, schräg verlaufenden Führungsschiene 16 herausgezogen und in die Führungsschiene 32 überführt.

Somit werden an der in Figur 3 rechts gelegenen Auslaufseite der Transportbänder 27, 28 bzw. 32, 33 zwei nebeneinander liegende Reihen von Knäueln 19 gebildet, die unmittelbar in eine gemeinsame Verpackungshülle eingebracht werden können. Wie in Figur 1 rechts schematisch angedeutet, können die einzelnen Knäuelreihen auch wahlweise nach oben weitergefördert werden, so daß auch neben- und übereinanderliegende Reihen zu einer Packung zusammengeschlossen werden können.

Die Führungsschiene 31 ist ebenso wie die Führungsschienen 23, 24 kreisförmig gekrümmt und verläuft um die Walze 3 herum, so daß sie auch in Figur 2 wieder sichtbar ist. An die Führungsschiene 31 schließt sich eine ortsfeste, schräg verlaufende Führungsschiene 34 an, welche die jetzt leeren Transportdorne 9 in die bereits erwähnte, quer zur Förderrichtung A verschiebliche Führungsschiene 13 überführt, so daß nunmehr inzwischen neu gewickelte Knäuel 19 auf die Transportdorne 9 überführt werden können, und sich der beschriebenen Vorgang wiederholt.

Bei der hier dargestellten und beschriebenen Vorrichtung werden die Knäuel 19 in zwei nebeneinander liegenden Reihen abgegeben. Durch entsprechende Ausbildung der mit einem Schieber verbundenen Führungsschiene 22 oder mit anders ausgebildetem, an sich bekannten Weichen lassen sich auch mehr als zwei nebeneinander liegende Bahnen oder Reihen von Knäueln erzeugen. Die Förderbänder 27, 28 bzw. 32, 33, welche die banderolierten oder etikettierten Knäuel 19 übernehmen und ein Herausziehen der Transportdorne 9 aus ihnen gestatten, können auch durch andere Transportmittel, welche zu den gleichen Funktionen befähigt sind, ersetzt werden. Insgesamt ist die erfindungsgemäße Vorrichtung kompakt und platzsparend und ermöglicht es, bereits im Bereich der Knäuelwickelmaschine mehrere Reihen banderolierter oder etikettierten Knäuel zu erzeugen, welche die unmittelbare Herstellung einer mehrere Knäuelreihen oder -lagen enthaltenden Verpackung gestattet.

**Ansprüche**

1. Vorrichtung zum lagegenauen Übernehmen und Transportieren von Knäueln an einer Knäuelwickelmaschine mit mehreren, in einer Reihe nebeneinander ageordneten Wickeldornen, wobei die Vorrichtung mehrere an einem Endlosförderer angeordnete, mit den Wickeldornen ausrichtbare Transportdorne aufweist, und die Knäuel durch eine Abschiebeeinrichtung von den Wickeldornen auf die Transportdorne überführbar sind,
**dadurch gekennzeichnet,**
daß der Endlosförderer (1) quer zur Förderrichtung (A, B) verlaufenden Gleitführungen (6) aufweist, auf denen die Transportdorne (9) verschieblich sind, und daß an den Transportdornen (9) angreifende, ortsfeste oder bewegliche Führungsschienen (12, 15, 16, 22, 23, 24, 29, 31, 34) vorgesehen sind, welche die Transportdorne (9) mit den von ihnen getragenen Knäueln (19) auf den Gleitführungen (6) in bestimmte, parallel zur Förderrichtung (A, B) nebeneinander verlaufende Bahnen lenken.

2. Vorrichtung nach Anspruch 1, dadurch gekennzeichnet, daß die Knäuel (19) durch die Abschiebeeinrichtung (21) von den Wickeldornen (17) direkt auf die Transportdorne (9) überführbar sind.

3. Vorrichtung nach Anspruch 1, dadurch gekennzeichnet, daß eine quer zur Förderrichtung (A, B) bewegliche Führungsschiene (12) vorgesehen ist, welche bei stillstehendem Endlosförderer (1) mehrere Transportdorne (9) gemeinsam an die Wickeldorne (17) heranführt.

4. Vorrichtung nach Anspruch 1, dadurch gekennzeichnet, daß eine quer zur Förderrichtung (A, B) verschiebliche Führungsschiene (22) vorgesehen ist, welche bei umlaufendem Endlosförderer (1) die Transportdorne (9) abwechselnd in bestimmte Bahnen verschiebt.

5. Vorrichtung nach Anspruch 1, dadurch gekennzeichnet, daß ortsfeste, schräg zur Förderrichtung verlaufende Führungsschienen (15, 16, 34) vorgesehen sind, welche bei umlaufendem Endlosförderer (1) die Transportdorne (9) in eine bestimmte Bahn überführen.

6. Vorrichtung nach Anspruch 1, dadurch gekennzeichnet, daß der Endlosförderer (1) zwei in gegenseitigem Abstand umlaufende Transportketten (4, 5) umfaßt, zwischen denen als Gleitführungen die Transportdorne (9) verschieblich tragende Stäbe (6) verlaufen.

7. Vorrichtung nach Anspruch 1, dadurch gekennzeichnet, daß den Bahnen der Transportdorne (9) parallel zum Endlosförderer (1) umlaufende Förderbänder (27, 28; 32, 33) zugeordnet sind, auf welche die Knäuel (19) von den TRansportdornen (9) durch Einwirkung der Führungsschienen (23, 24) überführ- und mehrreihig abtransportierbar sind.

8. Vorrichtung nach Anspruch 7, dadurch gekennzeichnet, daß die Einlaufstellen der Knäuel (19) in die Förderbänder (27, 28; 32, 33) in Förderrichtung (B) zueinander versetzt sind.

9. Vorrichtung nach einem der Ansprüche 7 oder 8, dadurch gekenn zeichnet, daß die Transportdorne (9) durch ortsfeste, schräg verlaufende Führungsschienen (15, 16) aus den zwischen den Transportbänderen (27, 28; 32, 33) gehaltenen Knäueln (19) herausziehbar sind.

10. Vorrichtung nach Anspruch 7, dadurch gekennzeichnet, daß an Stellen (25) vor den Transportbänderen (27, 28; 32, 33) Einrichtungen zum Banderolieren oder Etikettieren der Knäuel (19) vorgesehen sind.

FIG.1

FIG.2

EP 0 324 898 A1

FIG.3

FIG.4

EP 0 324 898 A1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4 ) |
|---|---|---|---|
| Y,D | DE-A-3406636 (CROON & LUCKE)<br>* das ganze Dokument *<br>--- | 1-2, 4-6 | B65H67/06<br>B65G17/00<br>B65H54/64 |
| Y | FR-A-2068641 (DOUGLAS-ROWNSON)<br>* Figuren 1, 3-4 * | 1-2, 4-6 | |
| A | | 3, 7-9 | |
| A | FR-A-2164458 (COMPAGNIE GENERALE DE MANUTENTION ET DE STOCKAGE)<br>* das ganze Dokument *<br>--- | 1, 4-6 | |
| A | US-A-3771640 (TOBEY ET AL.)<br>* das ganze Dokument *<br>--- | 1, 4-6 | |
| A | EP-A-0061432 (SAVIO)<br>----- | | |
| | | | **RECHERCHIERTE SACHGEBIETE (Int. Cl.4 )**<br><br>B65H<br>D01H<br>B65G |

Der vorliegende Recherchenbericht wurde für alle Patentansprüche erstellt

| Recherchenort | Abschlußdatum der Recherche | Prüfer |
|---|---|---|
| DEN HAAG | 10 APRIL 1989 | RAYBOULD B.D.J. |

EPO FORM 1503 03.82 (P0403)